# EUROPÄISCHE PATENTSCHRIFT

(11) **EP 3 354 920 B1**
(45) Veröffentlichungstag und Bekanntmachung des Hinweises auf die Patenterteilung: **11.12.2019**
(21) Anmeldenummer: 17153890.3
(22) Anmeldetag: 31.01.2017
(51) Int. Cl.: F16D 13/72, F16D 13/52, B60K 1/00

(54) **KUPPLUNGSANORDNUNG FÜR EINEN ANTRIEBSSTRANG UND GETRIEBEANORDNUNG MIT EINER SOLCHEN KUPPLUNGSANORDNUNG**
CLUTCH ASSEMBLY FOR A DRIVE TRAIN AND GEAR SYSTEM COMPRISING SUCH A COUPLING ASSEMBLY
SYSTÈME D'EMBRAYAGE POUR UN GROUPE PROPULSEUR ET TRANSMISSION COMPRENANT UN TEL SYSTÈME D'EMBRAYAGE

(43) Veröffentlichungstag der Anmeldung: 01.08.2018
(73) Patentinhaber: GKN Driveline Bruneck AG, 39031 Bruneck (IT)
(72) Erfinder: Huber, Dieter, 39030 Olang (IT); Putzer, Hanspeter, 39030 Gais (IT); Raffin, Peter, 39030 Kiens (IT); Senoner, Sigmund, 39031 Bruneck (IT); Thomaser, Kurt, 39035 Welsberg (Bz) (IT); Widmann, Thomas, 39037 Rodeneck (BZ) (IT); Gruber, Ivan, 39040 Schabs (IT)
(74) Vertreter: Neumann Müller Oberwalleney & Partner Patentanwälte

(56) Entgegenhaltungen:
- EP-A1- 2 108 855
- EP-A2- 2 105 336
- EP-A2- 2 163 777
- DE-B3-102015 220 446
- JP-B2- 5 617 996

## Beschreibung

Die Erfindung betrifft eine Kupplungsanordnung mit einer nasslaufenden Reiblamellenkupplung und einer passiven Schmiermittelsteuerung, insbesondere zum Einsatz im Antriebsstrang eines Kraftfahrzeugs. Reiblamellenkupplungen werden in Antriebssträngen zur reibschlüssigen Drehmomentübertragung zwischen zwei Antriebskomponenten, wie Antriebswellen und/oder Antriebsrädern, eingesetzt. Sie ermöglichen das Schalten von Antriebssträngen bei beliebigen Drehzahldifferenzen unter Drehmomentbelastung. Nasslaufende Reiblamellenkupplungen umfassen mehrere Reiblamellen, die mittels eines umgebenden Öls gekühlt beziehungsweise geschmiert werden.

Generell ist eine ausreichende Ölversorgung von Reiblamellenkupplungen von Wichtigkeit, um relativ zueinander drehenden Bauteile ausreichend zu schmieren und aufgrund von Reibung entstehende Wärme abzuführen. Auf der anderen Seite führt ein hoher Ölvolumenstrom zu Schleppmomenten und damit zu ungewünschten Verlusten.

Aus der EP 2 108 855 A1 ist eine Reiblamellenkupplung mit einem auf einer Welle axial fixierten Kupplungs-Ritzel, das Innenlamellen trägt, und einem hierzu axial beweglichen Kupplungs-Schiebeteil bekannt, das Außenlamellen trägt. Das Ritzel hat einen hülsenförmigen Endabschnitt mit äußeren radialen Bohrungen. Das Schiebeteil hat einen Hülsenansatz, der in den hülsenförmigen Endabschnitt eintaucht und innere radiale Bohrungen aufweist. In geöffneter Position der Kupplung fluchten die inneren und äußeren Bohrungen miteinander. Der Hülsenansatz ist einteilig mit dem Schiebeteil beziehungsweise dem Außenlamellenträger verbunden und gegenüber dem Kupplungs-Ritzel beziehungsweise Innenlamellenträger drehbar.

Aus der US 8 388 486 B2 ist ein Antriebsstrang eines Kraftfahrzeugs mit einer abschaltbaren Längsantriebswelle bekannt, wobei eine erste Kupplung im Leistungspfad vor der Längsantriebswelle und eine zweite Kupplung dahinter angeordnet sind. Die zweite Kupplung ist in Form einer nasslaufenden Reiblamellenkupplung gestaltet, die mittels einer Kugelrampenanordnung betätigbar ist. Es ist ein Ventil vorgesehen, um die Ölströmung zur Reiblamellenkupplung zu reduzieren, wenn die Längsantriebswelle abgekoppelt ist. Das Ventil wirkt mit einem im Gehäuse ortsfest gehaltenen Schmierungsrohr zusammen, welches die Reibungskupplung mit Öl versorgt.

Aus der DE 101 50 704 A1 ist eine Lamellenkupplung für Motorräder bekannt, die eine hohlzylindrische Kupplungswelle und eine Steuereinrichtung zur Steuerung des in der Kupplungswelle strömenden Ölvolumenstroms umfasst. Die Steuereinrichtung weist ein Ventil mit einem Stößel und einer Blende auf, das im Innenraum der Kupplungswelle angeordnet ist. Der Stößel ist mit einem axial beweglichen Ausrückelement der Lamellenkupplung verbunden. In eingekuppeltem Zustand der Lamellenkupplung befindet sich der Stößel in einer an die Blende herangerückten Stellung, was einem geringen Ölvolumenstrom entspricht, und im ausgekuppelten Zustand in einer von der Blende weggerückten Stellung, was einem größeren Ölvolumenstrom entspricht.

Aus der DE 697 25 150 T2 ist eine Scheibenkupplungsanordnung mit einem Innenlamellenträger und einem Außenlamellenträger bekannt. Der Außenlamellenträger hat eine Verzahnungsstruktur, in die Außenlamellen drehfest und axial beweglich gehalten sind. Im Bereich der Zahnlücken der Verzahnungsstruktur sind über den Umfang verteilte radiale Durchbrüche vorgesehen, durch die Schmiermittel nach außen strömen kann, um die Kupplung zu entölen.

Aus der DE 10 2011 086 376 B4 ist eine Ölzufuhrvorrichtung für eine Lamellenbremse in einem Getriebemodul bekannt. Zur Kühlung mit rutschender Lamellenbremse ist eine Ölanspritzung vorgesehen, die durch ein Ventil gesteuert wird. Der Ölzufluss findet nur in Schlupfbetriebphasen der Lamellenbremse statt. Die Ventilsteuerung kann an das Signal der Kolbenansteuerung der Lamellenbremse gekoppelt sein.

Aus der WO 2015 150 407 A1 ist eine Antriebsanordnung für ein Kraftfahrzeug mit einem Elektromotor, einem Stufengetriebe und einem Differentialgetriebe bekannt. Das Stufengetriebe hat zwei Getriebestufen, um das Differentialgetriebe mit unterschiedlichen Übersetzungsverhältnissen anzutreiben. Die Getriebestufen können mittels einer steuerbaren Schalteinheit geschaltet werden, die koaxial zur Antriebswelle angeordnet ist. Die Antriebswelle hat eine Längsbohrung sowie mehrere Querbohrungen zur Schmiermittelversorgung der Sitzabschnitte der auf der Antriebswelle angeordneten Räder und der Schalteinheit.

Der vorliegenden Erfindung liegt als Aufgabe zugrunde, eine Kupplungsanordnung vorzuschlagen, die eine Anpassung der Ölversorgung an den Bedarf ermöglicht und eine hohe Effizienz beziehungsweise geringe Leistungsverluste hat. Die Aufgabe besteht weiter darin, eine Antriebsanordnung mit einer solchen Kupplungsanordnung vorzuschlagen, bei der ungewünschte Schleppmomente und Reibungsverluste reduziert sind.

Eine Lösung besteht in einer Kupplungsanordnung für einen Antriebsstrang eines Kraftfahrzeugs, umfassend: eine nasslaufende Reiblamellenkupplung mit einem Innenlamellenträger, mit dem Innenlamellen drehfest und axial beweglich verbunden sind, und mit einem Außenlamellenträger, mit dem Außenlamellen drehfest und axial beweglich verbunden sind, wobei die Innenlamellen und die Außenlamellen gemeinsam ein Lamellenpaket bilden, wobei der Innenlamellenträger in einem axialen Überdeckungsbereich mit dem Lamellenpaket zumindest eine Bohrung aufweist, durch welche Schmiermittel zum Lamellenpaket fließen kann; eine Stützplatte, gegen die das Lamellenpaket axial abgestützt ist; eine axial bewegliche Druckplatte zum axialen Beaufschlagen des Lamellenpakets; eine Betätigungseinrichtung zum Betätigen der Reiblamellenkupplung durch axiales Bewegen der Druckplatte; und einen Durchflussregler zur Steuerung eines Ölvolumenstroms durch die zumindest eine Bohrung des Innenlamellenträgers, wobei der Durchflussregler ein Stellglied aufweist, das von der Betätigungseinrichtung für die Lamellenkupplung verstellbar ist, wobei das Stellglied einen Blendenabschnitt zum Verdecken eines Mündungsbereichs der zumindest einen Öffnung aufweist, wobei das Stellglied drehfest und axial beweglich mit dem Innenlamellenträger verbunden ist.

Die Kupplungsanordnung ermöglicht in vorteilhafter Weise eine Steuerung der Ölversorgung der Reiblamellenkupplung in Abhängigkeit vom Bedarf. Dabei dient der Stellgrad der Betätigungseinrichtung, von dem auch der Kupplungszustand der Reiblamellenkupplung abhängt, als Steuerparameter für den Ölvolumenstrom der Kupplung. Insofern hat die Betätigungsvorrichtung eine Doppelfunktion, nämlich Betätigung der Kupplung einerseits und Steuerung der Ölversorgung der Kupplung andererseits. Bei Betätigung der Reiblamellenkupplung wird gleichzeitig auch das Stellglied bewegt, wobei ein zwischen der Bohrung und dem Steuerabschnitt gebildeter Einströmquerschnitt verändert wird. Dabei ist vorgesehen, dass in Betriebszuständen, in denen keine oder nur eine reduzierte Schmierung beziehungsweise Kühlung erforderlich ist, insbesondere wenn die Reiblamellenkupplung voll geöffnet ist, der Ölvolumenstrom minimiert ist, so dass entsprechend auch die Schleppverluste minimiert sind. In Betriebszuständen, in denen die Reiblamellenkupplung im Schließsinn betätigt wird, insbesondere unter Schlupf Drehmoment überträgt, sind der Einströmquerschnitt und damit der Ölvolumenstrom entsprechend groß. In diesem Zustand werden die Reiblamellen entsprechend gut geschmiert beziehungsweise in den Reiblamellen entstehende Wärme wird über den erhöhten Ölvolumenstrom gut abgeführt. Insgesamt hat die Reiblamellenkupplung eine besonders hohe Effizienz beziehungsweise nur geringe Leistungsverluste.

Eine erfindungsgemäße Kupplungsanordnung kann an beliebiger Stelle im Antriebsstrang eines Kraftfahrzeugs im Leistungspfad zwischen einer Antriebsquelle und den Rädern angeordnet sein, beispielsweise vor, in oder hinter einem Übersetzungsgetriebe und/oder vor, in oder hinter einem Winkelgetriebe und/oder vor, in oder hinter einem Verteilergetriebe (PTU) und/oder innerhalb einer Längsantriebswelle oder vor, in oder hinter einem Differentialgetriebe und/oder in einer Seitenwelle.

Das Öl dient zur Abfuhr der durch die Reibung entstehenden Wärme sowie zur Schmierung der miteinander in Reibkontakt kommenden Bauteile. Insofern kann das Öl auch als Kühl- beziehungsweise Schmiermittel bezeichnet werden. Durch die Bohrungen im Innenlamellenträger einströmendes Öl fließt infolge der Zentrifugalkraft nach außen und kann durch entsprechende Bohrungen im Außenlamellenträger zurück in den Ölsumpf gelangen. Das strömende Öl kann auch andere bewegbare mechanischen Bauteile wie Lager oder Dichtungen kühlen und schmieren.

Der Innenlamellenträger weist vorzugsweise mehrere über den Umfang verteilte Bohrungen auf, wobei der Schmiermittelstrom durch axiales Bewegen des Stellglieds steuerbar ist. Die Bohrungen oder zumindest eine Teilzahl der Bohrungen können mit axialem Versatz zueinander angeordnet sein, das heißt, die umfangsverteilten Bohrungen können in mehreren voneinander beabstandeten Querebenen angeordnet sein. Hierdurch wird eine gute Ölversorgung über die gesamte axiale Länge des Lamellenpakets erreicht, da das Öl an mehreren Stellen über den Umfang und an mehreren Stellen über der axialen Länge zu den Reiblamellen gelangt.

Erfindungsgemäß ist das Stellglied drehfest und axial beweglich mit dem Innenlamellenträger verbunden. Insbesondere kann das Stellglied scheibenförmig gestaltet sein. Nach einer Ausführungsform weist das Stellglied mehrere über den Umfang verteilte sich in axiale Richtung erstreckende Blendenabschnitte auf, die gemeinsam mit dem Stellglied bei Betätigung der Kupplung mittels der Betätigungseinrichtung bewegt werden. Die Blendenabschnitte wirken mit den Bohrungen des Innenlamellenträgers zusammen, um diese variabel zu öffnen beziehungsweise zu schließen. Die Form der Blendenabschnitte ist prinzipiell beliebig und richtet sich insbesondere nach der Ausgestaltung der Bohrungen beziehungsweise Mündungen. Beispielsweise können die Blendenabschnitte als längliche Elemente gestaltet sein, die sich parallel zur Längsachse erstrecken, um jeweils eine oder mehrere Bohrungen in einer Reihe an der Innenfläche des Lamellenträgers abzudecken. Es ist jedoch auch denkbar, dass die Blendenabschnitte mit Bohrungen an einer Stirnfläche des Lamellenträgers zusammenwirken. Dann könnten die Blendenabschnitte beispielsweise in einer Ebene senkrecht zur Längsachse angeordnet und als flächige Segmente gestaltet sein. Die Anzahl und Anordnung der umfangsverteilten Blendenabschnitte entspricht vorzugsweise der Anzahl und Anordnung der Umfangsabschnitte, in denen der Innenlamellenträger Bohrungen aufweist, so dass entsprechend der Ölvolumenstrom durch alle Bohrungen mittels des Stellglieds steuerbar ist.

Der Innenlamellenträger kann einen Hülsenabschnitt aufweisen, der radial außen eine Eingriffsstruktur hat, in welche die Innenlamellen drehfest und axial beweglich eingreifen, und der radial innen eine Innenfläche mit zumindest einem oder mehreren sich in axiale Richtung erstreckenden Kanälen hat, wobei die Bohrungen des Innenlamellenträgers im Bereich des beziehungsweise der Kanäle angeordnet sind. Aufgrund der Zentrifugalkraft gelangt das an der Innenfläche des Hülsenabschnitts befindliche Öls zu den Kanälen und von dort in die Mündungen der Bohrungen hinein.

Die Bohrungen erstrecken sich von der Innenfläche des Innenlamellenträgers, beziehungsweise den hierin ausgebildeten Kanälen, durch den Hülsenabschnitt hindurch nach radial außen zur Außenfläche, so dass Öl in den Aufnahmeraum für das Lamellenpaket gelangen kann. Die Innenfläche des Innenlamellenträgers kann ebenfalls mit einer Eingriffsstruktur versehen sein, um den Innenlamellenträger zur Übertragung eines Drehmoments drehfest mit einem Anschlussbauteil wie beispielsweise einer Antriebswelle zu verbinden. Die Eingriffsstruktur kann beispielsweise in Form einer Längsverzahnung gestaltet sein, die in eine entsprechende Gegenverzahnung des Anschlussbauteils eingreift.

Vorzugsweise erstrecken sich die Blendenabschnitte des Stellglieds jeweils in einen zugehörigen Kanal hinein. Dabei kann insbesondere vorgesehen sein, dass die Grundfläche eines oder mehrerer Kanäle und die zugehörige Blendenabschnitte eben ausgebildet sind. Eine ebener Flächenkontakt zwischen einem Kanal und der zugehörigen Blendenabschnitte bewirkt eine besonders gute Abdichtung, so dass im geschlossenen Zustand des Stellglieds der Ölvolumenstrom und möglichst gering ist, was zu entsprechend geringen Schleppverlusten führt.

Die Blendenabschnitte des Stellglieds können - je nach Anzahl und Verteilung der Bohrungen im Innenlamellenträger - eine oder mehrere Öffnungen haben. Die Öffnungen sind im Verhältnis zu den Bohrungen des Innenlamellenträgers so angeordnet, dass sie in einer Schließ- beziehungsweise Reibstellung der Reiblamellenkupplung zumindest größtenteils, vorzugsweise vollständig fluchtend mit den Bohrungen des Innenlamellenträgers angeordnet, so dass ein großer Ölvolumenstrom zum Lamellenpaket gelangt, um die Lamellen zu kühlen und zu schmieren. Mit zumindest größtenteils fluchtend ist insbesondere gemeint, dass die Querschnittsflächen der Bohrungen zumindest hälftig oder mehr, insbesondere vollständig, freigegeben sind, so dass Öl ungehindert eintreten kann.

In einer Offenstellung der Reiblamellenkupplung sind die Zungenöffnungen zumindest größtenteils versetzt, vorzugsweise vollständig versetzt, zu den Bohrungen angeordnet sind, so dass der Ölvolumenstrom durch die Bohrungen minimiert ist. Mit zumindest größtenteils versetzt ist insbesondere gemeint, dass die Querschnittsflächen der Bohrungen zumindest hälftig oder mehr, insbesondere vollständig, von dem die Öffnungen umgebenden Blendenabschnitt verdeckt sind.

Das Stellglied ist an die Betätigungseinrichtung gekoppelt, so dass das Stellglied gemeinsam mit der Druckplatte in Abhängigkeit von der Steuerung des Kupplungsmoments betätigt wird. Das heißt, je stärker das Lamellenpaket beaufschlagt wird, desto mehr werden die Bohrungen freigegeben und der Ölvolumenstrom vergrößert. Je mehr die Kupplung geöffnet wird, des mehr werden die Bohrungen geschlossen und der Ölvolumenstrom entsprechend verkleinert. Durch axiales Bewegen der Druckplatte kann das vom Lamellenpaket zwischen dem Innenlamellenträger und dem Außenlamellenträger übertragbare Drehmoment nach Bedarf variabel gesteuert werden.

Nach einer bevorzugten Ausführungsform sind Federmittel vorgesehen, die an dem Innenlamellenträger axial abgestützt sind und das Stellglied von der Stützplatte weg axial beaufschlagen. Die Federmittel sind so gestaltet, dass sie eine von außen einwirkende Kraft aufnehmen, speichern und bei Entlastung wieder abgeben können. Beispielsweise können als Federmittel ein oder mehrere Federelemente vorgesehen sein, wie Tellerfedern, Schraubenfedern, Wellfedern oder dergleichen, die zwischen dem Stellglied einerseits und den Innenlamellenträger andererseits abgestützt sind.

Das Stellglied kann radial außen einen Scheibenabschnitt aufweisen, der gegen die Stellplatte der Reiblamellenkupplung axial abgestützt ist, sowie radial innen einen Stützabschnitt, gegen den die Federmittel axial abgestützt sind. Die Blendenabschnitte erstrecken sich vorzugsweise von dem Stützabschnitt aus in axiale Richtung in die Kanäle des Innenlamellenträgers hinein. Das Stellglied kann in Umfangsbereichen zwischen den Zungen mehrere radiale Vorsprünge haben, die drehfest in entsprechende Ausnehmungen des Innenlamellenträgers eingreifen. Auf diese Weise wir deine Relativbewegung zwischen dem Stellglied, den Federmitteln und dem Innenlamellenträger verhindert.

Nach einer Ausführungsform ist das Stellglied mit seinem außenliegenden Scheibenabschnitt gegen die Druckplatte axial abgestützt. Zwischen dem Stellglied und der Betätigungseinrichtung kann ein Axiallager, insbesondere ein Nadellager, vorgesehen sein. Das Axiallager ermöglicht eine relative Drehbewegung und eine axiale Kraftübertragung zwischen einem Betätigungsglied der Betätigungseinrichtung einerseits und dem Stellglied beziehungsweise der hiermit rotierenden Druckplatte andererseits.

Das Stellglied kann beispielsweise als Blechumformteil hergestellt werden, insbesondere mit den Herstellungsschritten: Bereitstellen einer Blechronde, Schneiden der radialen Innenkontur der Blechronde zur Erzeugung einer Mehrzahl von nach radial innen stehenden Blendenabschnitte und in Umfangsrichtung zwischen den Blendenabschnitte angeordneten Vorsprüngen, Tiefziehen der Blechronde zur Ausbildung des Scheibenabschnitts und des hierzu axial versetzten Stützabschnitts und Abbiegen der Blendenabschnitte, dass sie sich in axiale Richtung beziehungsweise parallel zueinander erstrecken. Sofern der Stützabschnitt in einer Radialebene liegt, werden die Abschnitte um 90° abgebogen. Nach einer möglichen Ausführungsform kann das Stellglied auch gehärtet werden, insbesondere bei Anwendungen, in denen ein Abschnitt des Stellglieds als Anlagefläche für ein Wälzlager dient.

Die Betätigungseinrichtung ist derart ausgestaltet beziehungsweise steuerbar, um die Druckplatte in Richtung Stützplatte, das heißt im Schließsinn der Reiblamellenkupplung, zu bewegen und/oder um die Druckplatte von der Stützplatte weg, das heißt im Öffnungssinn der Reiblamellenkupplung, zu bewegen. Insbesondere ist vorgesehen, dass die Betätigungseinrichtung die Reiblamellenkupplung im Schließsinn und im Öffnungssinn steuert. Hierfür kann beispielsweise ein Drehantrieb mit einem Rotations-Translations-Wandler vorgesehen sein, so dass eine Drehbewegung in einer ersten Drehrichtung ein Beaufschlagen der Druckplatte und damit ein Schließen der Kupplung bewirkt, während eine Drehbewegung in einer zweiten Drehrichtung ein Abrücken der Druckplatte und damit ein Öffnen der Kupplung bewirkt.

Nach einer möglichen Ausführungsform umfasst die Betätigungseinrichtung einen Rampenmechanismus mit einem Stützring, der gegen ein ortsfestes Bauteil axial abgestützt ist, und einem Stellring, der axial verschiebbar ist, sowie eine Antriebseinheit zum Verdrehen eines von dem Stützring und dem Stellring relativ zum anderen von dem Stützring und dem Stellring. Der Stützring und/oder der Stellring weisen eine Rampenstruktur auf, so dass eine Drehbewegung der Antriebseinheit in eine Axialbewegung des Stellrings umgewandelt wird. In weiterer Konkretisierung kann der Rampenmechanismus als Kugelrampenmechanismus gestaltet sein, wobei die beiden scheiben auf ihren einander zugewandten Stirnflächen jeweils eine Mehrzahl von in Umfangsrichtung verlaufenden Kugelrillen mit einer variablen Tiefe aufweisen. In Paaren von einander gegenüberliegenden Kugelrillen ist jeweils eine Kugel aufgenommen, über die sich die beiden Scheiben aneinander abstützen. Durch entsprechendes Verdrehen der einen Scheibe relativ zu der anderen Scheibe wandern die Kugeln in flachere oder tiefere Rillenbereiche, so dass die axiale Position der Druckplatte und damit das Reibmoment der Lamellenkupplung entsprechend nach Bedarf eingestellt werden kann. Zum Verdrehen einer der Scheiben relativ zur anderen kann beispielsweise ein Elektromotor vorgesehen sein, welcher mit einem Ritzel in eine Zahnstruktur an einer Außenfläche der drehbaren Scheibe eingreift.

Die Lösung besteht weiter in einer Getriebeanordnung für ein Kraftfahrzeug, umfassend: ein Untersetzungsgetriebe, das ausgestaltet ist, um eine von einem Eingangsteil eingeleitete Drehbewegung vom Schnellen ins Langsame zu übersetzen, sowie ein im Leistungspfad dem Untersetzungsgetriebe nachgelagertes Differentialgetriebe, das ausgestaltet ist um ein über das Untersetzungsgetriebe eingeleitetes Drehmoment auf zwei Ausgangsteile aufzuteilen, wobei das Untersetzungsgetriebe eine Zwischenwelle und ein auf der Zwischenwelle drehbar gelagertes erstes Zwischenrad aufweist, und wobei eine Kupplungsanordnung nach einer oder mehrerer der oben genannten Ausführungsformen vorgesehen ist, die im Leistungspfad zwischen der Zwischenwelle und dem hierzu drehbaren ersten Zwischenrad angeordnet ist. Die Kupplungsanordnung ermöglicht, wie oben beschrieben, eine passive mechanische Steuerung des Ölflusses durch die Kupplungsbetätigungseinheit in Abhängigkeit von deren Stellposition. Dies führt in vorteilhafter Weise zu geringen Schleppverlusten. Die Anordnung kann im Antriebsstrang für ein Fahrzeug mit einer angetriebenen Achse, für ein allradangetriebenes Fahrzeug, für ein Hybridfahrzeug und/oder ein Elektrofahrzeug gestaltet sein.

Das Untersetzungsgetriebe kann eine drehend antreibbare Antriebswelle und eine erste Getriebestufe mit einem ersten Rädersatz sowie eine zweite Getriebestufe mit einem zweiten Rädersatz zur Übertragung von Drehmoment von der Antriebswelle auf die Zwischenwelle mit unterschiedlichen Übersetzungsverhältnissen aufweisen. Hierfür kann insbesondere vorgesehen sein, dass der erste Rädersatz ein mit der Antriebswelle drehfest verbundenes erstes Antriebsrad und das erste Zwischenrad umfasst, und, dass der zweite Rädersatz ein mit der Antriebswelle drehfest verbundenes zweites Antriebsrad und ein relativ zur Zwischenwelle drehbares zweites Zwischenrad umfasst. Zum Steuern einer Drehmomentübertragung über den zweiten Rädersatz ist eine zweite Kupplungsanordnung nach obiger Ausgestaltung im Leistungspfad zwischen der Zwischenwelle und dem zweiten Zwischenrad angeordnet. Die Zwischenwelle kann ein Abtriebsrad zur Übertragung von Drehmoment auf einen Differentialträger des Differentialgetriebes aufweisen, wobei insbesondere vorgesehen ist, dass die Drehachse des Differentialträgers parallel zur Drehachse der Zwischenwelle verläuft und das Abtriebsrad axial zwischen den zwei Getriebeschaltstufen angeordnet ist.

Bevorzugte Ausführungsformen werden nachstehend anhand der Zeichnungsfiguren erläutert. Hierin zeigt:
- Figur 1: eine erfindungsgemäße Kupplungsanordnung im Längsschnitt;
- Figur 2: die Kupplungsanordnung aus Figur 1 im Längsschnitt in perspektivischer Darstellung;
- Figur 3: die Einheit umfassend Innenlamellenträger, Lamellenpaket, Druckplatte, Stellglied und Federmitteln der Kupplungsanordnung aus Figur 1 im Längsschnitt;
- Figur 4: die Einheit aus Figur 3 mit einer Antriebswelle in perspektivischer Axialansicht auf das Stellglied;
- Figur 5: ein Detail der Betätigungseinheit der Kupplungsanordnung aus Figur 1 in perspektivischer Darstellung;
- Figur 6: das Stellglied der Kupplungsanordnung aus Figur 1 in perspektivischer Darstellung;
- Figur 7: eine Antriebswellenanordnung mit einer Kupplungsanordnung aus Figur 1 im Längsschnitt; und
- Figur 8: eine Antriebsanordnung mit der Antriebswellenanordnung aus Figur 7 in schematischer Darstellung.

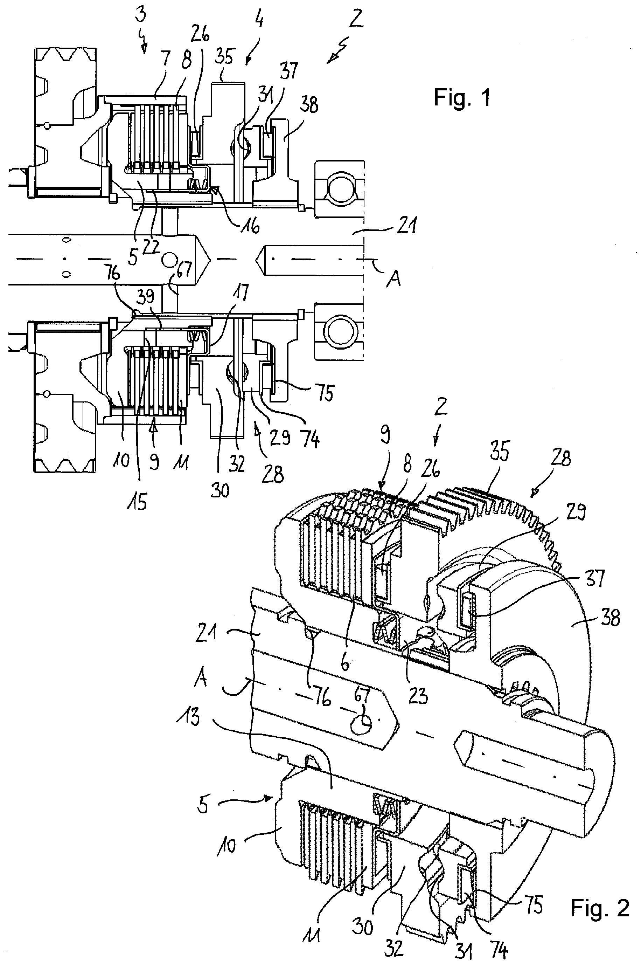

Die Figuren 1 bis 6, welche nachstehend gemeinsam beschrieben werden, zeigen eine erfindungsgemäße Kupplungsanordnung 2 für einen Antriebsstrang eines Kraftfahrzeugs. Die Kupplungsanordnung 2 umfasst eine nasslaufende Reiblamellenkupplung 3 und eine Betätigungseinrichtung 4 zur Steuerung des von der Reiblamellenkupplung übertragbaren Drehmoments.

Die Reiblamellenkupplung 3 umfasst einen Innenlamellenträger 5, mit dem Innenlamellen 6 drehfest und axial beweglich verbunden sind, einen Außenlamellenträger 7, mit dem Außenlamellen 8 axial beweglich und drehfest verbunden sind. Die Außenlamellen 8 und Innenlamellen 6 sind axial abwechselnd angeordnet und bilden gemeinsam ein Lamellenpaket 9. Das Lamellenpaket 9 ist in eine erste axiale Richtung gegen eine Stützplatte 10 axial abgestützt. Die Stützplatte ist bei der vorliegenden Ausführungsform einteilig mit dem Innenlamellenträger 5 gestaltet, ohne hierauf eingeschränkt zu sein. Zum Beaufschlagen des Lamellenpakets 9 ist eine Druckplatte 11 vorgesehen, welche von der steuerbaren Betätigungseinrichtung 4 axial bewegbar ist.

Die Betätigungseinrichtung 4 ist so gestaltet beziehungsweise steuerbar, dass sich hiermit das von der Reiblamellenkupplung 3 zu übertragende Drehmoment bedarfsweise variabel eingestellt werden kann. Dabei kann mittels der Reiblamellenkupplung 3 neben der Offenstellung, in der kein Drehmoment zwischen dem Innenlamellenträger 5 und dem Außenlamellenträger 7 übertragen wird, und einer Schließstellung, in der die Lamellenträger gemeinsam um die Drehachse umlaufen und das volle Drehmoment übertragen wird, auch jede beliebige Zwischenstellung realisiert werden. Das zu übertragende Drehmoment kann beispielsweise in einer elektronischen Regeleinheit (ECU) auf Basis von fortlaufend sensierten Fahrzustandsgrößen des Kraftfahrzeugs ermittelt werden. Die elektronische Regeleinheit gibt ein entsprechendes Steuerungssignal an die Betätigungseinrichtung 4 weiter, welche dann die Druckplatte 11 entsprechend beaufschlagt, so dass das gewünschte Drehmoment von der Reiblamellenkupplung 3 übertragen wird.

Der Innenlamellenträger 5 hat einen Hülsenabschnitt 13, der sich von dem Stützabschnitt 10 aus in axiale Richtung erstreckt und auf dem die Innenlamellen 6 drehfest und axial beweglich gehalten sind. Hierfür hat der Hülsenabschnitt 13 eine äußere Fläche mit einer Längsverzahnung 14, in welche die Innenlamellen 6 mit einer passenden Innenverzahnung zur Drehmomentübertragung formschlüssig eingreifen. In dem Hülsenabschnitt 13 sind über den Umfang verteilt mehrere Bohrungen 15 zum Durchtritt von Öl vorgesehen, um das Lamellenpaket 9 zu kühlen und zu schmieren. Die Bohrungen 15 können insofern auch als Durchtrittsöffnungen bezeichnet werden.

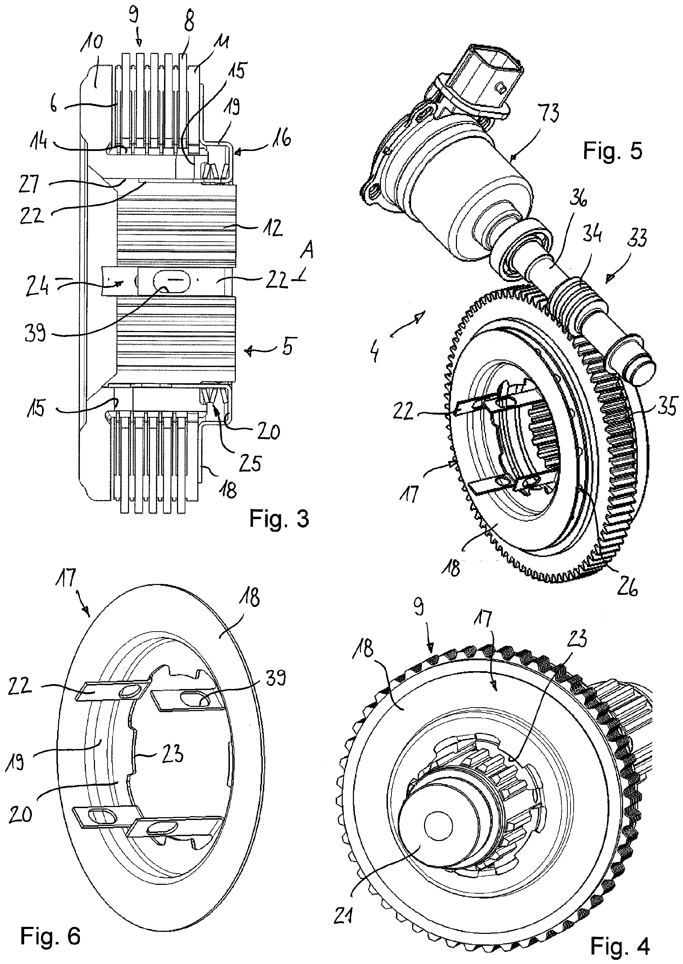

Radial innen hat der Innenlamellenträger 5 eine Eingriffsstruktur 12 zum drehfesten Verbinden mit einer Antriebswelle 21, wobei die von mehreren über den Umfang verteilten Kanälen 24 unterbrochen wird. Die Eingriffsstruktur 12 umfasst vorliegend insbesondere mehrere Längsverzahnungssegmente, die in eine passende Wellenverzahnung der Antriebswelle 21 zur Drehmomentübertragung formschlüssig in Eingriff bringbar sind, beziehungsweise eingreifen. In montiertem Zustand ist der Innenlamellenträger 5 gegen die Antriebswelle 21 axial abgestützt, und zwar insbesondere gegen eine Schulter 76 der Antriebswelle. Von der Betätigungseinheit 4 über die Druckplatte 11 in das Lamellenpaket 9 eingeleitete Axialkräfte werden somit über den Innenlamellenträger 5 in die Antriebswelle 21 eingeleitet und von dieser abgestützt. Es ist insbesondere in Figur 3 erkennbar, dass die umfangsverteilten Bohrungen 15 des Innenlamellenträgers 5 in den Umfangsbereichen der sich in axiale Richtung erstreckenden Kanäle 24 angeordnet sind. Bei Rotation des Innenlamellenträgers 5 fließt in den Kanälen 24 befindliches Öl aufgrund der Zentrifugalkraft in die Bohrungen 15 und gelangt durch diese nach radial außen zum Lamellenpaket 9.

Der Ölvolumenstrom durch die Bohrungen 15 wird von einem Durchflussregler 16 gesteuert, welcher von der Betätigungseinheit 4 betätigbar ist. Der Durchflussregler 16 umfasst, neben der Betätigungseinheit 4, ein axial bewegliches Stellglied 17 mit dem die Bohrungen 15 in Abhängigkeit von der axialen Position des Stellglieds 17 stufenlos verdeckt beziehungsweise freigegeben werden können. Der Ölvolumenstrom durch die Bohrungen 15 hängt vom jeweiligen Überdeckungsgrad zwischen den Bohrungen und dem Stellglied 17 ab, das heißt von der axialen Position des Stellglieds ab. Insofern dient der Stellgrad der Betätigungseinrichtung 4, von dem auch der Kupplungszustand der Reiblamellenkupplung 3 abhängt, als Steuerparameter für den Ölvolumenstrom. Bei geöffneter Kupplung 3 ist der Überdeckungsgrad der Bohrungen 15 groß und der Ölvolumenstrom entsprechend klein, so dass die Schleppverluste gering sind. Bei geschlossener Kupplung 3, das heißt Kupplungszuständen, in denen die Kupplung Drehmoment überträgt, ist der Überdeckungsgrad der Bohrungen 15 klein und der Ölvolumenstrom entsprechend groß.

Das Stellglied 17 ist drehfest und axial beweglich mit dem Innenlamellenträger 5 verbunden. Das Stellglied 17 weist gemäß der vorliegenden beispielhaften Ausführungsform radial außen einen Scheibenabschnitt 18 auf, der gegen die Druckplatte 11 axial abgestützt ist, einen radial innen an den Scheibenabschnitt 18 anschließenden Hülsenabschnitt 19, der sich vom Scheibenabschnitt in axiale Richtung erstreckt, einen an den Hülsenabschnitt radial innen anschließenden ringförmigen Stützabschnitt 20 sowie mehrere sich vom Stützabschnitt in axiale Richtung erstreckende Blendenabschnitte 22. Im Halblängsschnitt bilden der Scheibenabschnitt, der Hülsenabschnitt und der Stützabschnitt eine Z-Form, weswegen das vorliegende Stellglied auch als Z-Scheibe bezeichnet werden kann. In Umfangsbereichen zwischen zwei benachbarten Blendenabschnitte 22 hat das Stellglied 17 radiale Vorsprünge 23, die in entsprechende Längsausnehmungen auf der Außenfläche des Innenlamellenträgers 5 drehfest und axial beweglich eingreifen.

Die Blendenabschnitte 22 dienen zum selektiven Verdecken beziehungsweise Freigeben der Mündungsbereiche der Bohrungen 15. Sie erstrecken sich in die Kanäle 24 hinein, wobei die Außenflächen einer jeweiligen Zunge flächig mit der Innenfläche 27 des zugehörigen Kanals in Anlage ist. Es ist insbesondere vorgesehen, dass die Blendenabschnitte 22 und die Innenflächen 27 der Kanäle 24 eben gestaltet sind, so dass in geöffnetem Zustand der Kupplung eine gute Abdichtung gegeben ist. Es ist insbesondere in den Figuren 3 und 4 erkennbar, dass die Blendenabschnitte 22 jeweils einen Durchbruch 39 aufweisen. Die Anzahl der Blendenabschnitte 22 und Kanäle 24 ist grundsätzlich frei wählbar und beträft vorliegend vier, die insbesondere regelmäßig über den Umfang verteilt sind. Ferner ist erkennbar, dass zumindest einige der Durchtrittsöffnungen 15 des Innenlamellenträgers 5 in unterschiedlichen Ebenen, das heißt in unterschiedlichen axialen Positionen des Hülsenabschnitts 13 angeordnet sind. Dasselbe gilt entsprechend für die Öffnungen 39, die so gestaltet und relativ zu den Mündungen der Durchtrittsöffnungen 15 des Innenlamellenträgers 5 so angeordnet sind, dass beide Öffnungen 15, 39 zumindest weitestgehend miteinander fluchten. Auf diese Weise kann ein großer Ölvolumenstrom zum Lamellenpaket 9 gelangen, um die Lamellen zu kühlen und zu schmieren. Insbesondere können zumindest einige der Öffnungen 39 in Form von Langlöchern gestaltet sein.

Das Stellglied 17 kann beispielsweise als Blechumformteil aus einer Blechronde durch Schneiden der radialen Innenkontur, wobei die Blendenabschnitte 22 und die in Umfangsrichtung zwischen den Zungen liegenden Vorsprünge 23 erzeugt werden, Tiefziehen der Blechronde, wobei der Scheibenabschnitt 18 und der hierzu axial versetzte Stützabschnitt 20 erzeugt werden, und Abbiegen der Blendenabschnitte vom Stützabschnitt erfolgen, wobei die Blendenabschnitte um 90° abgebogen werden. Die Blendenabschnitte können auch als Zungenabschnitte oder Segmente bezeichnet werden.

Der Strömungsregler 16 weist Federmittel 25 auf, die zwischen dem Innenlamellenträger 5 und dem Stellglied 17 derart wirksam angeordnet sind, dass das Stellglied von der Stützplatte 10 weg, das heißt im Öffnungssinn der Kupplung 3 axial beaufschlagt wird. Dabei wirken die Federmittel 25 als Energiespeicher zur Rückstellung des Stellglieds 17 in unbelastetem Zustand.

Es ist insbesondere in den Figuren 1 und 2 erkennbar, dass zwischen der Betätigungsvorrichtung 4 und der Reiblamellenkupplung 3 ein Axiallager 26 vorgesehen, das vorliegend in Form eines Nadellagers gestaltet ist. Es versteht sich, dass andere Lager ebenso denkbar sind, wie beispielsweise ein Gleitlager. Das Axiallager ermöglicht eine axiale Kraftübertragung von der Betätigungsvorrichtung 4 auf die Druckplatte 10 bei gleichzeitiger rotatorischer Entkopplung des mit dem Innenlamellenträger 5 gemeinsam rotierenden Stellglieds 17 von der Betätigungsvorrichtung 4. Konkret ist bei der vorliegenden Ausführungsform vorgesehen, dass das Stellglied 17 mit einer ersten Seitenfläche des Scheibenabschnitts 18 gegen die Druckplatte 10 axial abgestützt ist und mit der entgegengesetzt gerichteten zweiten Seitenfläche in Anlagekontakt mit dem Axiallager 26 ist. Der Scheibenabschnitt 18 des Stellglieds 17 dient als Abwälzfläche für das Nadellager 26, weswegen insbesondere vorgesehen ist, dass zumindest der Scheibenabschnitt 18 oder das gesamte Stellglied gehärtet ist.

Durch Betätigen der Betätigungsvorrichtung 4 im Schließsinn wird das Stellglied 17 vom Axiallager axial in Richtung Stützplatte 10 beaufschlagt. Dabei wird die eingeleitete Axialkraft auf die Druckplatte 11 übertragen, so dass die Druckplatte 11 und das Stellglied 17 gemeinsam axial bewegt werden. Hierdurch werden die Kupplung 3 mittels der Druckplatte 11 zunehmend geschlossen und die Bohrungen 15 mittels des Stellglieds 17 zum Durchtritt von Öl zunehmend freigegeben. Die Federmittel 25 werden dabei axial vorgespannt. Wird die Betätigungsvorrichtung 4 wieder im Öffnungssinn betätigt, geben die Federmittel 25 die gespeicherte Energie wieder ab und bewegen das Stellglied 17 in Richtung Betätigungsvorrichtung 4, wobei die Bohrungen 15 zunehmend verschlossen werden. Die Federmittel umfassen vorliegend ein Paket von mehreren Tellerfedern, wobei andere Federelemente ebenso verwendet werden können.

Die Betätigungseinrichtung 4 umfasst bei der vorliegenden Ausführungsform einen Kugelrampenmechanismus 28 und eine Antriebseinheit 73. Der Kugelrampenmechanismus 28 weist einen Stützring 29, welche gegenüber einem ortsfesten Bauteil axial abgestützt ist, sowie einen dem Stützring gegenüberliegenden und um die Drehachse A2 drehend antreibbaren Stellring 30 auf. Konkret ist bei der vorliegenden Ausführungsform vorgesehen, dass der Stützring 29 über ein Axiallager 37 gegen eine Stützplatte 38 axial abgestützt ist. Das Axiallager 37 umfasst eine Lagerscheibe 74, die gegen eine Rückseite des Stützrings 29 axial abgestützt ist, sowie Wälzkörper, die auf der Lagerscheibe 74 abwälzen. Zwischen dem Axiallager 37 und der Stützplatte 38 ist eine Passscheibe 75 angeordnet. Durch die Passscheibe 75 wird das Spiel der Reiblamellenkupplung definiert beziehungsweise eingestellt, so dass die Passscheibe indirekt auch die Position des Stellgliedes 17 beeinflusst. Die Passscheibe 75 ist, wie die Lagerscheibe 74, gehärtet und dient als Abwälzfläche für das Nadellager 37. Die Stützplatte 38 ist mit der Antriebswelle 21 drehfest verbunden und über einen Sicherungsring axial abgestützt. Es versteht sich jedoch dass die Kugelrampeneinheit 28 auch an einem anderen Bauteil, beispielsweise einem ortsfesten Gehäuse axial abgestützt sein kann.

In den einander gegenüberliegenden Stirnflächen des Stützrings 29 und Stellrings 30 sind jeweils über dem Umfang verteilte Kugelrillen 31, 32 angeordnet die eine variable Tiefe über dem Umfang aufweisen und in denen jeweils eine Kugel aufgenommen ist. Zur Betätigung der Kugelrampeneinheit 28 dient ein Elektromotor als Antriebseinheit 73, welcher den Stellring 30 gegenüber dem Stützring 29 über ein Schneckengetriebe 33 verdrehen kann. Das Schneckengetriebe 33 umfasst eine vom Elektromotor drehend antreibbare Schnecke 34 und ein Zahnrad 35, mit dem die Schnecke in Eingriff ist. Das Zahnrad 35 ist mit dem Stellring 30 verbunden, insbesondere einteilig mit diesem gestaltet. Das Schneckengetriebe 33 ist insbesondere selbsthemmend ausgelegt. Das bedeutet, dass das Zahnrad 35 bei Stromlosschalten der Betätigungseinheit 4 in der aktuellen Drehposition verbleibt, so dass entsprechend auch die Kupplung in der aktuellen Kupplungsposition verbleibt. Ein automatisches Rückstellen durch die Federmittel 25 erfolgt nicht. Die Federmittel 25 unterstützen lediglich passiv den Öffnungsvorgang, der aber aktiv von der Betätigungseinheit 4 beziehungsweise dem Elektromotor 73 eingeleitet wird. Hauptfunktion der Federmittel 25 ist die axiale Vorspannung der beiden Axiallager 26, 27 und die axiale Fixierung beziehungsweise Vorspannung des Innenlamellenträgers 5 gegen den Anschlag 76 sowie in entgegengesetzter Richtung der Aktuator-Ringe 29, 30 gegen die Stützplatte 38.

Bei Drehbewegung der Schnecke 34 vom Elektromotor wird das Zahnrad 35 und damit der Stellring 30 relativ zum Stützring 29 verdreht. Je nach Drehrichtung der Motorwelle 36 beziehungsweise der damit verbundenen Schnecke 34 kann der Stellring 30 in eine erste Drehrichtung oder in die entgegengesetzte zweite Drehrichtung gedreht werden. Ausgehend von einer Ausgangsposition, in der die beiden Ringe 29, 30 aneinander axial angenähert sind, führt eine Verdrehen des Stellrings 30 relativ zum Stützring 29 in einer ersten Drehrichtung dazu, dass die in den Kugelrillen 31, 32 gehaltenen Kugeln in Bereiche geringerer Tiefe laufen, so dass der Stellring 30 axial in Richtung Kupplung 3 wandert. Der Stellring 30 ist über das Axiallager 36 gegen das Stellglied 17 beziehungsweise die Druckplatte 11 axial abgestützt, welche entsprechend gemeinsam in Richtung Stützplatte 10 bewegt werden. Auf diese Weise wird die Kupplung 3 geschlossen und der Durchflussregler 16 geöffnet. In vollständig geschlossenem Zustand ist das Lamellenpaket 9 maximal beaufschlagt, so dass das volle Drehmoment zwischen Innenlamellenträger 5 und Außenlamellenträger 7 übertragen wird. Wird der Elektromotor und damit der Stellring 30 in die entgegengesetzte zweite Drehrichtung verdreht, laufen die in den Kugelrillen 31, 32 gehaltenen Kugeln wieder in Bereiche größerer Rillentiefe, wobei der Stellring 30 von den Federmitteln 25 über das Stellglied 17 axial in Richtung Stützring beaufschlagt beziehungsweise bewegt wird. Auf diese Weise wird die Kupplung 3 wieder geöffnet und der Durchflussregler 16 geschlossen.

Die Kupplungsanordnung 2 bewirkt eine sehr gute Kühlung der Kupplung 3 im betätigten Zustand und hat besonders geringe Schleppmomente in unbetätigtem Zustand. Eine solche Kupplungsanordnung 2 kann prinzipiell an beliebiger Stelle im Antriebsstrang eines Kraftfahrzeugs verwendet werden.

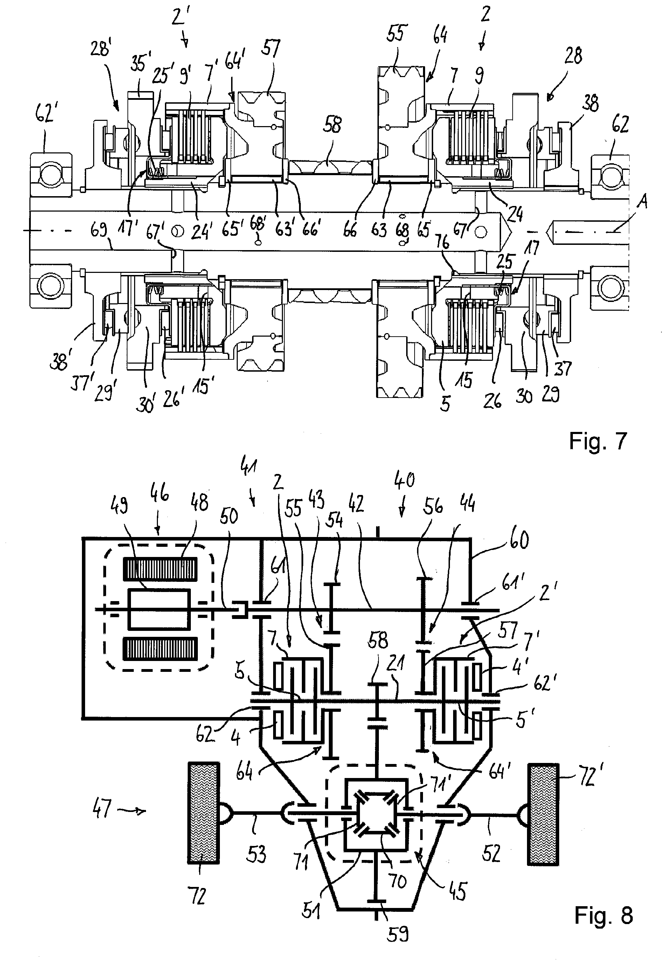

Ein Anwendungsbeispiel für eine erfindungsgemäße Kupplungsanordnung besteht in einer Getriebeanordnung 40 beziehungsweise Antriebsanordnung 41 gemäß den Figuren 7 und 8, welche nachstehend gemeinsam beschrieben werden.

Die Getriebeanordnung 40 umfasst eine Antriebswelle 42, eine erste Übersetzungsstufe 43, eine zweite Übersetzungsstufe 44, eine Zwischenwelle 21 mit zwei Kupplungsanordnungen 2, 2' sowie ein Differentialgetriebe 45. Die Kupplungsanordnungen 2, 2' entsprechen der in den Figuren 1 bis 6 gezeigten Kupplungsanordnung 2, auf deren Beschreibung insofern Bezug genommen wird. Die beiden Übersetzungsstufen 43, 44 ermöglichen, dass in die Getriebeanordnung 40 eingeleitetes Drehmoment von der Antriebswelle 43 auf die Zwischenwelle 21 beziehungsweise auf das Differentialgetriebe 45 mit zwei unterschiedlichen Übersetzungsverhältnissen i1, i2 übertragen werden kann.

Die Antriebswelle 43 ist von einer Antriebsquelle 46 drehend antreibbar, die insbesondere in Form einer elektrischen Maschine gestaltet ist. Die Baueinheit aus elektrischer Maschine 46 und Getriebe 40 wird auch als Elektroantriebsanordnung 41 oder kurz Elektroantrieb bezeichnet. Die elektrische Maschine 46 umfasst einen Stator 48 und einen hierzu drehbaren Rotor 49, der bei Bestromen der elektrischen Maschine eine Motorwelle 50 drehend antreibt. Die Drehbewegung der Motorwelle 50 wird auf die Antriebswelle 43 des Getriebes 40 übertragen. Die elektrische Maschine 46 wird von einer Batterie (nicht dargestellt) mit elektrischem Strom versorgt, wobei auch vorgesehen sein kann, dass die Batterie im Generatorbetrieb von der elektrischen Maschine aufgeladen wird.

In das Getriebe 40 von der elektrischen Maschine 46 eingeleitetes Drehmoment kann mittels der ersten Kupplungsanordnung 2 oder der zweiten Kupplungsanordnung 2, 2' wahlweise über die erste Übersetzungsstufe 43 oder die zweite Übersetzungsstufe 44 auf die Zwischenwelle 21 übertragen werden, so dass das Differentialgetriebe 45 beziehungsweise die zugehörige Antriebsachse 47 des Kraftfahrzeugs entsprechend in zwei unterschiedlichen Drehzahlbereichen antreibbar ist. Die Zwischenwelle 21 ist mit einem Differentialträger 51 des Differentialgetriebes 45 antriebsverbunden. Mittels des Differentialgetriebes 45 wird das eingeleitete Drehmoment auf zwei Seitenwellen 52, 53 zum Antreiben der Fahrzeugräder aufgeteilt.

Die Getriebeeinheit 40 ist als Untersetzungsgetriebe gestaltet, so dass eine vom Elektromotor 46 eingeleitete Drehbewegung vom Schnellen ins Langsame übersetzt wird. Die erste Übersetzungsstufe 43, die auch als Gangschaltstufe bezeichnet werden kann, umfasst ein drehfest mit der Antriebswelle 43 verbundenes erstes Antriebsrad 54 und ein drehbar auf der Zwischenwelle 21 gelagertes erstes Zwischenrad 55, die miteinander in Verzahnungseingriff sind. Erstes Antriebsrad 54 und erstes Zwischenrad 55 bilden einen ersten Rädersatz mit einem ersten Übersetzungsverhältnis i1. Die zweite Übersetzungsstufe 44 umfasst ein mit der Antriebswelle 43 drehfest verbundenes zweites Antriebsrad 56 und ein auf der Zwischenwelle 21 verbundenes drehbar gelagertes zweites Zwischenrad 57, die miteinander in Verzahnungseingriff sind. Zweites Antriebsrad 56 und zweites Zwischenrad 57 bilden einen zweiten Rädersatz mit einem zweiten Übersetzungsverhältnis i2. Eine dritte Übersetzungsstufe umfasst das mit der Zwischenwelle 21 drehfest verbundene Abtriebsrad 58 und das hiermit kämmende fest mit dem Differentialträger 51 verbundene Ringrad 59. Das Abtriebsrad 58 der Zwischenwelle 21 und das Ringrad 59 bilden dabei einen dritten Rädersatz mit einem dritten Übersetzungsverhältnis i3.

Die Antriebswelle 43 ist mittels geeigneter Lager 61, 61' in einem Gehäuse 60 der Antriebseinheit um eine Drehachse A1 drehbar gelagert. Die Antriebsräder 54, 56 können beispielsweise über Wellenverzahnungen (Splines) mit der Antriebswelle 42 drehfest verbunden sein. Die Zwischenwelle 21 ist mittels geeigneter Lager 62, 62' im Gehäuse 60 um eine zweite Drehachse A2 drehbar gelagert. Das Abtriebsrad 58 ist drehfest mit der Zwischenwelle 21 verbunden und axial zwischen dem ersten und zweiten Zwischenrad 55, 57 angeordnet. Die Zwischenräder 55, 57 sind mittels Wellenlagern 62, 62' auf der Zwischenwelle 21 drehbar gelagert. Die Antriebswelle 43, die Zwischenwelle 21 und die Drehachse A3 des Differentialträgers 51 verlaufen parallel zueinander.

Die beiden Kupplungsanordnungen 2, 2' entsprechen einander hinsichtlich ihres Aufbaus und ihrer Funktionsweise. Stellvertretend wird nachstehend nur eine der beiden Kupplungsanordnungen beschrieben, wobei die Beschreibung gleichermaßen für die andere gilt. Bei der vorliegenden Ausführungsform ist der Außenlamellenträger 7 fest mit dem Zwischenrad 57 verbunden, insbesondere verschweißt. Die so gebildete Radeinheit 64 ist mittels eines zugehörigen Wellenlagers 62 auf der Zwischenwelle 21 drehbar gelagert. Eine Abstützung der gebildeten Radeinheit 64 in axialer Richtung erfolgt über zwei Axiallager 65, 66, die insbesondere in Form von Gleitscheiben gestaltet sind. Die kupplungsseitige Gleitscheibe 65 ist über einen Sicherungsring gegenüber der Zwischenwelle 21 axial abgestützt. Die zweite Gleitscheibe 66 ist gegen eine Schulter der Zwischenwelle 21 axial abgestützt. Die Zwischenwelle 12 ist in Form einer Hohlwelle gestaltet und hat in den zu schmierenden Wellenabschnitten eine Mehrzahl von radialen Bohrungen 67, 68, durch die Öl aus dem Innenraum 69 der Welle nach radial außen zu den Reiblamellenkupplungen 3, 3' und den Wellenlagern 63, 63' der Radeinheiten 64, 64' fließen kann.

Das Abtriebsrad 58 der Zwischenwelle 21 kämmt mit dem Ringrad 59 des Differentialträgers 51, um Drehmoment in das Differential 45 einzuleiten. Der Differentialträger 51 ist in dem Gehäuse 60 um die Drehachse X3 drehbar gelagert. Das Differential 45 umfasst mehrere Differentialräder 70, die in dem Differentialträger 51 auf einer zur Drehachse X3 senkrechten Achse drehbar gelagert sind, sowie zwei Seitenwellenräder 71, 71', die jeweils koaxial zur Drehachse X3 drehbar angeordnet und mit den Differentialrädern 70 in Verzahnungseingriff sind. Vom Ringrad 59 in den Differentialträger 51 eingeleitetes Drehmoment wird über die Differentialräder 70 auf die beiden Seitenwellenräder 71, 71' übertragen, zwischen denen eine ausgleichende Wirkung besteht. Die Seitenwellenräder 71, 71' sind zur Übertragung von Drehmoment mit den zugehörigen Seitenwellen 72, 72' verbunden, die das eingeleitete Drehmoment auf die Räder 73, 73' des Kraftfahrzeugs übertragen.

Die Getriebeeinheit 40 wird mittels der Kupplungen 2, 2' betätigt, die von dem jeweiligen Aktuator 4, 4' betätigbar sind. Durch entsprechendes Ansteuern der Aktuatoren 4, 4' kann ein in das Getriebe 40 eingeleitetes Drehmoment entweder mittels der ersten Kupplungsanordnung 2 über die erste Übersetzungsstufe 43 in einem ersten Drehzahlbereich auf das Differential 45 übertragen werden oder mittels der zweiten Kupplungsanordnung 2' über die zweite Übersetzungsstufe 44 in einem zweiten Drehzahlbereich. Durch die Ausgestaltung der Kupplungsanordnungen 2, 2' kann das zu übertragende Drehmoment beziehungsweise die Drehzahl nach Bedarf variabel eingestellt werden. Wenn beide Kupplungen 3, 3' geöffnet werden, sind die Zwischenwelle 21 und die im Leistungspfad dahinter liegenden Antriebskomponenten von den im Leistungspfad davor liegenden Komponenten und der elektrischen Maschine abgekoppelt. Dabei sind die Stellglieder 17 geschlossen, so dass der Ölvolumenstrom gering ist und Schleppmomente entsprechend minimiert sind.

Sind beide Kupplungen 3, 3' geschlossen blockieren diese eine Drehbewegung der Getriebekomponenten, so dass auf diese Weise eine Parksperrenfunktion für den Elektroantrieb realisiert ist. Dabei können die beiden Betätigungseinheiten 4, 4' dadurch, dass die Schneckengetriebe 33 selbsthemmend ausgelegt sind, abgeschaltet werden, so dass zum Halten der Schließposition kein weiterer Strombedarf besteht.

### Bezugszeichenliste

- 1 2: Kupplungsanordnung
- 3: Reiblamellenkupplung
- 4: Betätigungseinrichtung
- 5: Innenlamellenträger
- 6: Innenlamellen
- 7: Außenlamellenträger
- 8: Außenlamellen
- 9: Lamellenpaket
- 10: Stützplatte
- 11: Druckplatte
- 12: Eingriffsstruktur
- 13: Hülsenabschnitt
- 14: Längsverzahnung
- 15: Bohrung
- 16: Durchflussregler
- 17: Stellglied
- 18: Scheibenabschnitt
- 19: Hülsenabschnitt
- 20: Stützabschnitt
- 21: Antriebswelle
- 22: Zungenabschnitt
- 23: Vorsprung
- 24: Kanal
- 25: Federmittel
- 26: Axiallager
- 27: Innenfläche
- 28: Kugelrampenmechanismus
- 29: Stützring
- 30: Stellring
- 31: Kugelrillen
- 32: Kugelrillen
- 33: Schneckengetriebe
- 34: Schnecke
- 35: Zahnrad
- 36: Motorwelle
- 37: Axiallager
- 38: Stützplatte
- 39: Durchbruch
- 40: Getriebeanordnung
- 41: Antriebsanordnung
- 42: Antriebswelle
- 43: erste Schaltstufe
- 44: zweite Schaltstufe
- 45: Differentialgetriebe
- 46: Antriebsquelle
- 47: Antriebsachse
- 48: Stator
- 49: Rotor
- 50: Motorwelle
- 51: Differentialträger
- 52: Seitenwelle
- 53: Seitenwelle
- 54: erstes Antriebsrad
- 55: erstes Zwischenrad
- 56: zweites Antriebsrad
- 57: zweites Zwischenrad
- 58: Abtriebsrad
- 59: Ringrad
- 60: Gehäuse
- 61, 61': Lager
- 62, 62': Lager
- 63, 63': Wellenlager
- 64, 64': Radeinheit
- 65, 65': Gleitscheibe
- 66, 66': Gleitscheibe
- 67, 67': Radialbohrung
- 68, 68': Radialbohrung
- 69: Innenraum
- 70: Differentialrad
- 71, 71': Seitenwellenrad
- 72, 72': Rad
- 73: Antriebseinheit
- 74: Lagerscheibe
- 75: Passscheibe
- 76: Anschlag

- A: Achse

## Patentansprüche

1. Kupplungsanordnung für einen Antriebsstrang eines Kraftfahrzeugs, umfassend:
eine nasslaufende Reiblamellenkupplung (3) mit einem Innenlamellenträger (5), mit dem Innenlamellen (6) drehfest und axial beweglich verbunden sind, und mit einem Außenlamellenträger (7), mit dem Außenlamellen (8) drehfest und axial beweglich verbunden sind, wobei die Innenlamellen (6) und die Außenlamellen (8) gemeinsam ein Lamellenpaket (9) bilden, wobei der Innenlamellenträger (5) in einem axialen Überdeckungsbereich mit dem Lamellenpaket (9) zumindest eine Bohrung (15) aufweist, durch welche Öl zum Lamellenpaket (9) fließen kann,
eine Stützplatte (10), gegen die das Lamellenpaket (9) axial abgestützt ist,
eine axial bewegliche Druckplatte (11) zum axialen Beaufschlagen des Lamellenpakets (9),
eine Betätigungseinrichtung (4) zum Betätigen der Reiblamellenkupplung (3) durch axiales Bewegen der Druckplatte,
einen Durchflussregler (16) zur Steuerung eines Ölvolumenstroms durch die zumindest eine Bohrung (15) des Innenlamellenträgers (5), wobei der Durchflussregler (16) ein Stellglied (17) aufweist, das von der Betätigungseinrichtung (4) für die Reiblamellenkupplung (3) verstellbar ist, wobei das Stellglied (17) einen Blendenabschnitt (22) zum Verdecken eines Mündungsbereichs der zumindest einen Bohrung (15) aufweist,
**dadurch gekennzeichnet,**
**dass** das Stellglied (17) drehfest und axial beweglich mit dem Innenlamellenträger (5) verbunden ist.

2. Kupplungsanordnung nach Anspruch 1,
**dadurch gekennzeichnet,**
**dass** der Innenlamellenträger (5) mehrere über den Umfang verteilte Bohrungen (15) aufweist, die insbesondere in mehreren unterschiedlichen Querebenen angeordnet sind, wobei der Ölvolumenstrom durch die Bohrungen (15) durch axiales Bewegen des Stellglieds (17) steuerbar ist.

3. Kupplungsanordnung nach einem der Ansprüche 1 oder 2,
**dadurch gekennzeichnet**,
das Stellglied (17) mehrere über den Umfang verteilte sich in axiale Richtung erstreckende Blendenabschnitte (22) aufweist, wobei die Blendenabschnitte (22) jeweils einer zugehörigen Bohrung (15) des Innenlamellenträgers (5) zugeordnet sind, um den Ölvolumenstrom zu steuern.

4. Kupplungsanordnung nach einem der Ansprüche 1 bis3,
**dadurch gekennzeichnet,**
**dass** der Innenlamellenträger (5) einen Hülsenabschnitt (19) aufweist, der radial außen eine Eingriffsstruktur hat, in welche die Innenlamellen (6) drehfest und axial beweglich eingreifen, und der radial innen eine Innenfläche mit mehreren sich in axiale Richtung erstreckenden Kanälen (24) aufweist, wobei die Bohrungen (15) des Innenlamellenträgers (5) in Umfangsbereichen der Kanäle (24) angeordnet sind.

5. Kupplungsanordnung nach einem der Ansprüche 3 oder 4,
**dadurch gekennzeichnet,**
**dass** die Blendenabschnitte (22) sich jeweils in einen zugehörigen Kanal (24) hineinerstrecken, wobei Grundflächen der Kanäle (24) und die zugehörigen Blendenabschnitte (22) insbesondere eben ausgebildet sind.

6. Kupplungsanordnung nach einem der Ansprüche 3 bis 5,
**dadurch gekennzeichnet,**
**dass** die Blendenabschnitte (22) des Stellglieds (17) jeweils eine Öffnung (39) haben, welche die zugehörige Bohrung (15) in einer Schließstellung der Reiblamellenkupplung (3) zumindest größtenteils verschließt und in einer Schlupfstellung der Reiblamellenkupplung (3) zumindest größtenteils freigibt.

7. Kupplungsanordnung nach einem der Ansprüche 1 bis 6,
**dadurch gekennzeichnet,**
**dass** Federmittel (25) vorgesehen sind, die an dem Innenlamellenträger (5) axial abgestützt sind und das Stellglied (17) von der Stützplatte (10) weg axial beaufschlagen.

8. Kupplungsanordnung nach Anspruch 7,
**dadurch gekennzeichnet,**
**dass** das Stellglied (17) radial außen einen Scheibenabschnitt (18) aufweist, der gegen die Druckplatte (11) der Reiblamellenkupplung (3) axial abgestützt ist, sowie einen radial innen einen Stützabschnitt (20), gegen den die Federmittel (25) axial abgestützt sind, wobei sich die Blendenabschnitte (22) von dem Stützabschnitt (20) aus in axiale Richtung in die Kanäle (24) des Innenlamellenträgers (5) hineinerstrecken.

9. Kupplungsanordnung nach Anspruch 8,
**dadurch gekennzeichnet,**
**dass** der Stützabschnitt (20) in Umfangsbereichen zwischen den Blendenabschnitte (22) mehrere radiale Vorsprünge (23) aufweist, die drehfest in entsprechende Ausnehmungen des Innenlamellenträgers (5) eingreifen.

10. Kupplungsanordnung nach einem der Ansprüche 1 bis 9,
**dadurch gekennzeichnet,**
**dass** die Betätigungseinrichtung (4) steuerbar ist, um die Druckplatte (11) in Richtung Stützplatte (10), das heißt im Schließsinn der Reiblamellenkupplung (3), zu bewegen und/oder um die Druckplatte (11) von der Stützplatte weg, das heißt im Öffnungssinn der Reiblamellenkupplung (3), zu bewegen.

11. Kupplungsanordnung nach einem der Ansprüche 1 bis 10,
**dadurch gekennzeichnet,**
**dass** zwischen dem Stellglied (17) und der Betätigungseinrichtung (4) ein Axiallager (26), insbesondere ein Nadellager, vorgesehen ist.

12. Kupplungsanordnung nach einem der Ansprüche 1 bis 11,
**dadurch gekennzeichnet,**
**dass** die Betätigungseinheit (4) einen Rampenmechanismus (28) umfasst mit einem Stützring (29), der gegen ein ortsfestes Bauteil (21) axial abgestützt ist, und einem Stellring (30), der axial verschiebbar ist, sowie eine Antriebseinheit (73) zum Verdrehen eines von dem Stützring (29) und dem Stellring (30) relativ zum anderen von dem Stützring (29) und dem Stellring (30), wobei der Stützring (29) und der Stellring (30) eine Rampenstruktur (31, 32) aufweisen, so dass eine Drehbewegung der Antriebseinheit (73) in eine Axialbewegung des Stellrings (30) umgewandelt wird.

13. Getriebeanordnung für einen Antriebsstrang eines Kraftfahrzeugs, umfassend:
ein Untersetzungsgetriebe, das ausgestaltet ist, um eine von einem Eingangsteil (42) eingeleitete Drehbewegung vom Schnellen ins Langsame zu übersetzen, sowie ein im Leistungspfad dem Untersetzungsgetriebe nachgelagertes Differentialgetriebe (45), das ausgestaltet ist um ein über das Untersetzungsgetriebe eingeleitetes Drehmoment auf zwei Ausgangsteile (71, 71') aufzuteilen,
wobei das Untersetzungsgetriebe eine Zwischenwelle (21) und ein auf der Zwischenwelle (21) drehbar gelagertes erstes Zwischenrad (55) aufweist,
**gekennzeichnet durch** eine Kupplungsanordnung (2) nach einem der Ansprüche 1 bis 12, wobei die Kupplungsanordnung (2) im Leistungspfad zwischen der Zwischenwelle (21) und dem hierzu drehbaren ersten Zwischenrad (55) angeordnet ist.

14. Getriebeanordnung nach Anspruch 13,
**dadurch gekennzeichnet,**
**dass** das Untersetzungsgetriebe eine drehend antreibbare Antriebswelle (42) und eine erste Schaltstufe mit einem ersten Rädersatz sowie eine zweite Schaltstufe mit einem zweiten Rädersatz zur Übertragung von Drehmoment von der Antriebswelle (42) auf die Zwischenwelle (21) mit unterschiedlichen Übersetzungsverhältnissen (i1, i2) aufweist,
wobei der erste Rädersatz ein mit der Antriebswelle (42) drehfest verbundenes erstes Antriebsrad (54) und das erste Zwischenrad (55) umfasst,
und wobei der zweite Rädersatz ein mit der Antriebswelle (42) drehfest verbundenes zweites Antriebsrad (56) und ein relativ zur Zwischenwelle (21) drehbares zweites Zwischenrad (57) umfasst,
wobei die Zwischenwelle (21) ein Abtriebsrad (58) zur Übertragung von Drehmoment auf einen Differentialträger (51) des Differentialgetriebes (45) aufweist, wobei insbesondere vorgesehen ist, dass die Drehachse (X3) des Differentialträgers (51) parallel zur Drehachse (X2) der Zwischenwelle (21) verläuft und das Abtriebsrad (58) axial zwischen den zwei Schaltstufen () angeordnet ist, **dadurch gekennzeichnet, dass** eine zweite Kupplungsanordnung (2') nach einem der Ansprüche 1 bis 13 im Leistungspfad zwischen der Zwischenwelle (21) und dem zweiten Zwischenrad (57) angeordnet ist.

## Claims

1. Clutch assembly for a driveline of a motor vehicle, comprising:
a wet running friction plate clutch (3) having an inner plate carrier (5) to which inner plates (6) are connected in a rotationally fixed and axially movable way,
and having an outer plate carrier (7) to which outer plates (8) are connected in a rotationally fixed and axially movable way, wherein the inner plates (6) and the outer plates (8) jointly form a plate package (9), wherein the inner plate carrier (5) comprises at least one bore (15) in an axial overlapping region with the plate package (9), through which bore (15) oil can flow to the plate package (9),
a supporting plate (10) against which the plate package (9) is axially supported,
an axially movable pressure plate (11) for axially loading the plate package (9),
an operating device (4) for operating the friction plate clutch (3) by axially moving the pressure plate,
a flow controller (16) for controlling an oil volume flow rate through the at least one bore (15) of the inner plate carrier (5), wherein the flow controller (16) comprises a setting member (17) which is operable by the operating device (4) for the friction plate clutch (3), wherein the setting member (17) comprises a cover portion (22) for covering an opening region of the at least one bore (15),
**characterised in**
**that** the setting member (17) is connected to the inner plate carrier (5) in a rotationally fixed and axially movable way.

2. Clutch assembly according to claim 1,
**characterised in**
**that** the inner plate carrier (5) comprises a plurality of circumferentially distributed bores (15) which, more particularly, are arranged in different transverse planes, wherein the oil volume flow rate through the bores (15) is controllable by axially moving the setting member (17).

3. Clutch assembly according to any one of claims 1 or 2,
**characterised in**
**that** the setting member (17) comprises a plurality of circumferentially distributed axially extending cover portions (22), wherein the cover portions (22) are each associated with a respective bore (15) of the inner plate carrier (5) for controlling the oil volume flow rate.

4. Clutch assembly according to any one of claims 1 to 3,
**characterised in**
**that** the inner plate carrier (5) comprises a sleeve portion (19) that, radially outside, comprises an engaging structure which is engaged by the inner plates (6) in a rotationally fixed and axially movable way and that, radially inside, comprises an inner face with a plurality of axially extending channels (24), wherein the bores (15) of the inner plate carrier (5) are arranged in circumferential regions of the channels (24).

5. Clutch assembly according to any one of claims 3 or 4,
**characterised in**
**that** the cover portions (22) each extend into a respective channel (24), wherein bottom faces of the channels (24) and the respective cover portions (22) are configured to be in particular planar.

6. Clutch assembly according to any one of claims 3 to 5,
**characterised in**
**that** the cover portions (22) of the setting member (17) each comprise an aperture (39) which, in a closed condition of the friction plate clutch (3), at least largely closes the respective bore (15) and, in a slip condition of the friction plate clutch (3), at least largely releases same.

7. Clutch assembly according to any one of claims 1 to 6,
**characterised in**
**that** spring means (25) are provided which are axially supported against the inner plate carrier (5) and load the setting member (17) axially away from the supporting plate (10).

8. Clutch assembly according to claim 7,
**characterised in**
**that** the setting member (17), radially outside, comprises a disc portion (18) that is axially supported against the pressure plate (11) of the friction plate clutch (3), and, radially outside, a supporting portion (20) against which the spring means (25) are axially supported, wherein the cover portions (22) extend from the supporting portion (20) in axial direction into the channels (24) of the inner plate carrier (5).

9. Clutch assembly according to claim 8,
**characterised in**
**that** the supporting portion (20) comprises a plurality of radial projections (23) in circumferential regions between the cover portions (22) which engage corresponding recesses of the inner plate carrier (5) in a rotationally fixed way.

10. Clutch assembly according to any one of claims 1 to 9,
**characterised in**
**that** the operating device (4) is controllable to move the pressure plate (11) towards the supporting plate (10), i.e. in a closing sense of the friction plate clutch (3), and/or to move the pressure plate (11) away from the supporting plate, i.e. in an opening sense of the friction plate clutch (3).

11. Clutch assembly according to any one of claims 1 to 10,
**characterised in**
**that** an axial bearing (28) is provided between the setting member (17) and the operating device (4), more particularly a needle bearing.

12. Clutch assembly according to any one of claims 1 to 11,
**characterised in**
**that** the operating device (4) comprises a ramp mechanism (28) with a supporting ring (29) that is axially supported against a stationary component (21), and a setting ring (30) that is axially displaceable, as well as a drive unit (73) for rotating one of the supporting ring (29) and the setting ring (30) relative to the other one of the supporting ring (29) and the setting ring (30), wherein the supporting ring (29) and the setting ring (30) comprise a ramp structure (31, 32), so that a rotational movement of the drive unit (73) is converted into an axial movement of the setting ring (30).

13. Drive assembly for a driveline of a motor vehicle, comprising:
a reduction gearing which is configured to translate a rotational movement introduced by an input part (42) from high speed to low speed, and a differential gearing (45) arranged downstream the reduction gearing in the power path that is configured to distribute a torque introduced from the reduction gearing to two output parts (71, 72),
wherein the reduction gearing comprises an intermediate shaft (21) and a first intermediate gear (55) rotatably supported on the intermediate shaft (21),
**characterised by** a clutch assembly (2) according to any one of claims 1 to 12,
wherein the clutch assembly (2) is arranged in the power path between the intermediate shaft (21) and the first intermediate gear (55) rotatable relative thereto.

14. Transmission assembly according to claim 13,
**characterised in**
**that** the reduction gearing comprises a rotatingly drivable driveshaft (42) and a first transmission stage with a first gear set as well as a second transmission stage with a second gear set for transmitting torque from the driveshaft (42) to the intermediate shaft (21) with different transmission ratios (i1, 12),
wherein the first gear set comprises a first input gear (54) connected to the driveshaft (42) in a rotationally fixed way and the first intermediate gear (55),
and wherein the second gear set comprises a second input gear (56) connected to the driveshaft (42) in a rotationally fixed way and a second intermediate gear (57) rotatable relative to the intermediate shaft (21),
wherein the intermediate shaft (21) comprises an output gear (58) for transmitting torque to a differential carrier (51) of the differential gearing (45), wherein, more particularly it is proposed that the rotational axis (X3) of the differential carrier (51) extends parallel to the rotational axis (X2) of the intermediate shaft (21) and that the output gear (58) is arranged axially between the two transmission stages,
**characterised in that** a second clutch assembly (2') according to any one of claims 1 to 13 is arranged in the power path between the intermediate shaft (21) and the second intermediate gear (57).

## Revendications

1. Système d'embrayage pour un groupe propulseur d'un véhicule automobile, comprenant :
un embrayage multidisque à friction en milieu lubrifié (3) avec un support de disques intérieurs (5) avec lequel les disques intérieurs (6) sont reliés solidaires en rotation et axialement de façon mobile et avec un support de disques extérieurs (7), avec lequel les disques extérieurs (8) sont reliés solidaires en rotation et axialement de façon mobile, sachant que les disques intérieurs (6) et les disques extérieurs (8) forment en commun un ensemble de disques (9), sachant que le support de disques intérieurs (5) comporte au moins un trou (15) dans une zone de couverture axiale avec l'ensemble de disques (9) à travers lequel de l'huile peut s'écouler vers l'ensemble de disques (9),
une plaque d'appui (10) contre laquelle l'ensemble de disques (9) est axialement appuyé,
une plaque de pression axialement mobile (11) pour la sollicitation axiale de l'ensemble de disques (9),
un dispositif d'actionnement (4) pour actionner l'embrayage multidisque à friction (3) par le mouvement axial de la plaque de pression,
un régulateur de débit (16) pour commander un débit d'huile à travers au moins un trou (15) du support de disques intérieurs (5), sachant que le régulateur de débit (16) comporte un actionneur (17), qui peut être réglé par le dispositif d'actionnement (4) pour l'embrayage multidisque à friction (3), sachant que l'actionneur (17) comporte une section d'obturation (22) pour recouvrir une zone d'embouchure d'au moins un trou (15),
**caractérisé en ce que**
l'actionneur (17) est relié solidaire en rotation et axialement de façon mobile au support de disques intérieurs (5).

2. Système d'embrayage selon la revendication 1,
**caractérisé en ce que**
le support de disques intérieur (5) comporte plusieurs trous (15) répartis sur la périphérie, qui sont disposés notamment dans plusieurs plans transversaux, sachant que le débit d'huile à travers les trous (15) peut être commandé par le mouvement axial de l'actionneur (17).

3. Système d'embrayage selon l'une quelconque des revendications 1 ou 2,
**caractérisé en ce que**
l'actionneur (17) comporte plusieurs sections d'obturation (22) réparties sur la périphérie s'étendant dans la direction axiale, sachant que les sections d'obturation (22) sont respectivement attribuées à un trou (15) correspondant du support de disques intérieurs (5) pour commander le débit d'huile.

4. Système d'embrayage selon l'une quelconque des revendications 1 à 3,
**caractérisé en ce que**
le support de disques intérieurs (5) comporte une section de manchon (19), qui possède radialement en extérieur une structure de prise dans laquelle les disques intérieurs (6) viennent en prise solidaires en rotation et axialement de façon mobile et qui comporte radialement à l'intérieur une surface interne avec plusieurs conduits (24) s'étendant en direction axiale, sachant que les trous (15) du support de disques intérieurs (5) sont disposés dans des zones périphériques des conduits (24).

5. Système d'embrayage selon l'une quelconque des revendications 3 ou 4,
**caractérisé en ce que**
les sections d'obturation (22) s'étendent respectivement intérieurement dans un conduit (24) correspondant, sachant que des surfaces de base des conduits (24) et les sections d'obturation (22) correspondantes sont constituées notamment de façon plane.

6. Système d'embrayage selon l'une quelconque des revendications 3 à 5,
**caractérisé en ce que**
les sections d'obturation (22) de l'actionneur (17) possèdent respectivement une ouverture (39), laquelle ferme au moins en grande partie le trou (15) correspondant dans une position de fermeture de l'embrayage multidisque à friction (3) et le libère au moins en grande partie dans une position de patinage de l'embrayage multidisque à friction (3).

7. Système d'embrayage selon l'une quelconque des revendications 1 à 6,
**caractérisé en ce que**
des moyens à ressort (25) sont prévus, qui sont appuyés axialement sur le support de disques intérieurs (5) et sollicitent l'actionneur (17) axialement éloigné de la plaque d'appui (10).

8. Système d'embrayage selon la revendication 7,
**caractérisé en ce que**
l'actionneur (17) comporte radialement en extérieur une section à disque (18) qui est appuyée axialement contre la plaque de pression (11) de l'embrayage multidisque à friction (3), ainsi qu'une section d'appui (20) radialement à l'intérieur, contre laquelle les moyens à ressort (25) sont axialement appuyés, sachant que les sections d'obturation (22) s'étendent à l'intérieur dans les conduits (24) du support de disques intérieurs (5) en direction axiale (24) depuis la section d'appui (20).

9. Système d'embrayage selon la revendication 8,
**caractérisé en ce que**
la section d'appui (20) comporte plusieurs saillies radiales (23) dans les zones périphériques entre les sections d'obturation (22), qui viennent en prise solidaires en rotation dans des évidements correspondants du support de disques intérieurs (5).

10. Système d'embrayage selon l'une quelconque des revendications 1 à 9,
**caractérisé en ce que**
le dispositif d'actionnement (4) peut être commandé pour déplacer la plaque de pression (11) en direction de la plaque d'appui (10) c'est-à-dire au sens de fermeture de l'embrayage multidisque à friction (3) et/ou pour déplacer la plaque de pression (11) éloignée de la plaque d'appui, c'est-à-dire au sens d'ouverture de l'embrayage multidisque à friction (3).

11. Système d'embrayage selon l'une quelconque des revendications 1 à 10,
**caractérisé en ce qu'**
un palier axial (26), notamment un palier à aiguilles, est prévu entre l'actionneur (17) et le dispositif d'actionnement (4).

12. Système d'embrayage selon l'une quelconque des revendications 1 à 11,
**caractérisé en ce que**
l'unité d'actionnement (4) comprend un mécanisme à rampe (28) avec une bague de support (29) qui est appuyée axialement contre un composant fixe (21) et une bague de réglage (30), qui peut être déplacée axialement, ainsi qu'une unité de propulsion (73) pour faire tourner une des bagues de support (29) et de réglage (30) par rapport aux autres bagues de support (29) et de réglage (30), sachant que la bague de support (29) et la bague de réglage (30) comportent une structure à rampe (31, 32) de telle manière qu'un mouvement de rotation de l'unité de propulsion (73) est converti en un mouvement axial de la bague de réglage (30).

13. Transmission pour un groupe propulseur d'un véhicule automobile, comprenant :
un réducteur, qui est constitué pour transformer un mouvement de rotation initié par une partie d'entrée (42) de rapide à lent, ainsi qu'un différentiel (45) logé dans le chemin de la puissance en aval du réducteur, qui est constitué pour diviser en deux parties de sortie (71, 71') par le biais du couple introduit par le biais du réducteur,
sachant que le réducteur comporte un arbre intermédiaire (21) et une première roue intermédiaire (55) logée pouvant tourner sur l'arbre intermédiaire (21),
**caractérisée par** un système d'embrayage (2) selon l'une quelconque des revendications 1 à 12, sachant que le système d'embrayage (2) est disposé dans le chemin de la puissance entre l'arbre intermédiaire (21) et la première roue intermédiaire (55) pouvant tourner à cet effet.

14. Transmission selon la revendication 13,
**caractérisée en ce que**
le réducteur comporte un arbre de transmission (42) pouvant être entraîné en rotation et un premier niveau de fonctionnement avec un premier jeu de pignons ainsi qu'un deuxième niveau de fonctionnement avec un deuxième jeu de pignons pour transmettre le couple de l'arbre de transmission (42) à l'arbre intermédiaire (21) avec des rapports de réduction (i1, i2) différents,
sachant que le premier jeu de pignons comprend une première roue d'entraînement (54) reliée solidaire en rotation à l'arbre de transmission (42) et la première roue intermédiaire (55),
et sachant que le deuxième jeu de pignons comprend une deuxième roue d'entraînement (56) reliée solidaire en rotation à l'arbre de transmission (42) et une deuxième roue intermédiaire (57) pouvant tourner par rapport à l'arbre intermédiaire (21),
sachant que l'arbre intermédiaire (21) comporte une roue de sortie (58) pour transmettre le couple à un support de différentiel (51) du différentiel (45), sachant qu'il est en particulier prévu que l'axe de rotation (X3) du support de différentiel (51) passe parallèlement à l'axe de rotation (X2) de l'arbre (21) et la roue de sortie (58) est disposée axialement entre les deux niveaux de fonctionnement (),
**caractérisée en ce qu'**un deuxième système d'embrayage (2') est disposé selon l'une quelconque des revendications 1 à 13 dans le chemin de la puissance entre l'arbre intermédiaire (21) et la deuxième roue intermédiaire (57).
